**Europäisches Patentamt**

**European Patent Office**

**Office européen des brevets**

(19)

(11) Publication number : **0 382 288 B1**

# (12) EUROPEAN PATENT SPECIFICATION

(45) Date of publication of patent specification :
**09.12.92 Bulletin 92/50**

(51) Int. Cl.⁵ : **B60J 1/14,** B60P 3/32

(21) Application number : **90200222.9**

(22) Date of filing : **30.01.90**

(54) **Vehicle, in particular camper or caravan.**

(30) Priority : **06.02.89 NL 8900288**

(43) Date of publication of application :
**16.08.90 Bulletin 90/33**

(45) Publication of the grant of the patent :
**09.12.92 Bulletin 92/50**

(84) Designated Contracting States :
**AT BE CH DE DK ES FR GB GR IT LI LU NL SE**

(56) References cited :
**EP-A- 0 001 544**
**DE-A- 2 060 756**
**DE-A- 2 925 563**
**US-A- 3 534 501**

(73) Proprietor : **POLYPLASTIC B.V.**
**Vlaardingweg 98**
**NL-3044 CK Rotterdam (NL)**

(72) Inventor : **'T Hoen, Jan**
**Lyceumlaan 10**
**NL-3135 CX Vlaardingen (NL)**

(74) Representative : **de Bruijn, Leendert C. et al**
**Nederlandsch Octrooibureau**
**Scheveningseweg 82 P.O. Box 29720**
**NL-2502 LS Den Haag (NL)**

EP 0 382 288 B1

## Description

The invention relates to a vehicle, in particular camper or caravan, at least one side wall of which is provided with a double-walled window comprising a dish-shaped transparent plastic sheet on the inside and a flat transparent plastic sheet on the outside bonded by the peripheral edge thereto, said window being connected at its top edge by a hinge.

US-A-3534501 describes such a double-walled window which is intended for a vehicle or boat and is connected at its top side by a hinge.

The object of the invention is to give a window of this type such a position in a side wall of the vehicle that the flat sheet on the outside does not project either outwards or inwards relative to the outside face of the side wall when said window is in the closed position, while the side wall also has sufficient space for placing a sealing section without the side wall becoming too weak at that point. Another object is to reduce the air resistance by good streamlining and to enhance the appearance of the vehicle.

According to the invention, to this end the outside surface of the flat sheet lies essentially flush with the outside surface of the side wall when the window is closed, a sealing section which acts upon a vertical part of the peripheral edge of the dish-shaped sheet when the window is closed is fixed on the inner periphery of the window sash, while the edge of the sash is of smaller thickness than the side wall and abuts the inside surface of the side wall, and the distance between the outside of the edge of the sash and the outside surface of the side wall is bridged by a stepped section made of metal or plastic.

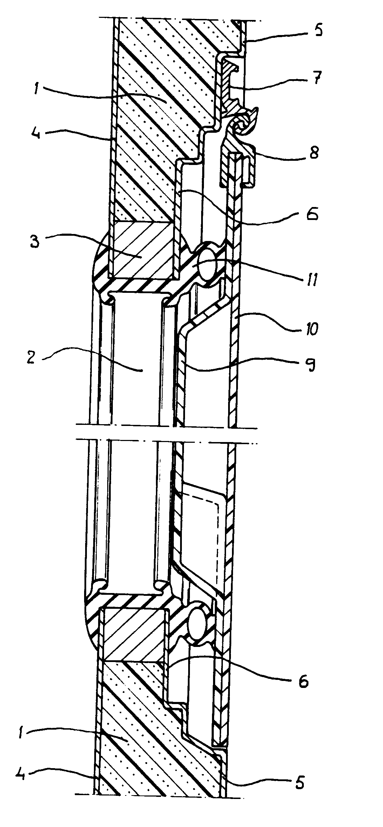

The invention will now be explained in greater detail with reference to the figure, which shows a vertical cross-section through a part of a side wall of a camper with double-walled window.

The side wall of the camper is indicated by 1. A window opening 2 with a sash whose inside peripheral edge is indicated by 3 is cut out of said wall. Said peripheral edge 3 abuts the inside surface 4 of the side wall, while there is a stepped section 6 between the outside of the edge 3 of the sash and the outside surface 5 of the side wall 1.

A hinge, comprising a fixed part 7 and a clamping part 8, is fitted on the top part of said section 6. Said clamping part 8 retains the top edge of a double-walled window, which is made up of a dish-shaped transparent plastic sheet 9 which is bonded by its flat peripheral edge to a flat transparent plastic sheet 10.

In the closed position shown the window 9, 10 is pressed by locking elements, which are known per se and are not shown, against a rubber sealing element 11, which is clamped by a U-section round the edge 3 of the sash. When the window is open, it is held in a slanting position by setback stays of a known design.

A characteristic of the vehicle is that the flat sheet 10 is located at the outside and when the window is closed lies essentially flush with the outside surface 5 of the side wall 1 of the vehicle. This enhances the appearance of the vehicle, and the good streamlining helps to reduce the air resistance of the vehicle.

## Claims

1. Vehicle, in particular camper or caravan, at least one side wall (1) of which is provided with a double-walled window comprising a dish-shaped transparent plastic sheet (9) on the inside and a flat transparent plastic sheet (10) on the outside bonded by the peripheral edge thereto, said window being connected at its top edge by a hinge (7, 8), characterized in that the outside surface of the flat sheet (10) lies essentially flush with the outside surface (5) of the side wall when the window is closed, a sealing section (11) which acts upon a vertical part of the peripheral edge (3) of the dish-shaped sheet (9) when the window is closed is fixed on the inner periphery (3) of the sash of the window, while the sash edge (3) is of smaller thickness than the side wall (1) and abuts the inside surface (4) of the side wall, and the distance between the outside of the sash edge (3) and the outside surface (5) of the side wall (1) is bridged by a stepped section (6) made of metal or plastic.

## Patentansprüche

1. Fahrzeug, insbesondere ein Wohnwagen oder ein Wohnmobil, bei dem mindestens eine Seitenwand (1) mit einem doppelwandigen Fenster versehen ist, bestehend aus einer tellerförmigen, transparenten Kunststoffschicht (9) auf der Innenseite und einer flachen transparenten kunststoffschicht (10) auf der Außenseite, die an dem umlaufenden Rand miteinander verbunden sind, wobei das Fenster an seinem oberen Rand mit einem Scharnier (7, 8) verbunden ist, dadurch gekennzeichnet, daß die Außenseite der flachen Schicht (10) im wesentlichen mit der Außenseite (5) der Seitenwand fluchtet, wenn das Fenster geshlossen ist, ein Dichtungsabschnitt (11), der auf einen senkrechten Teil des umlaufenden Randes (3) der tellerförmigen Schicht (9) einwirkt, wenn das Fenster geschlossen ist, an dem inneren Umfang (3) des Fensterrahmens befestigt ist, während der Fensterrahmenrand (3) von geringerer Dicke als die Seitenwand (1) ist und an der Innenseite (4) der Seitenwand anliegt, und daß der Abstand zwischen der Außenseite des Fensterrahmenrandes (3) und der Außenseite (5) der Seitenwand (1) durch einen abgestuften Abschnitt (6) aus Metall oder Kunststoff überbrückt ist.

**Revendications**

1.  Véhicule, en particulier camping-bus ou caravane, dont au moins une paroi latérale (1) est pourvue d'une fenêtre à paroi double comprenant une plaque en matière plastique transparente en forme d'assiette (9) du côté intérieur et une plaque en matière plastique transparente plane (10) du côté extérieur y assemblée par son bord périphérique, ladite fenêtre étant connectée, à son bord supérieur, par une charnière (7, 8). caractérisé en ce que la surface extérieure de la plaque plane (10) se trouve sensiblement à ras de la surface extérieure (5) de la paroi latérale lorsque la fenêtre est fermée, un tronçon de joint d'étanchéité (11). qui agit sur une partie verticale du bord périphérique (3) de la plaque en forme d'assiette (9) lorsque la fenêtre est fermée, est fixe sur le pourtour intérieur (3) du châssis de fenêtre, tandis que le chant du châssis (3) est d'une épaisseur inférieure à celle de la paroi latérale (1) et vient en butée contre la surface intérieure (4) de la paroi latérale, et la distance entre l'extérieur du chant du châssis (3) et la surface extérieure (5) de la paroi latérale (1) est surplombée d'un tronçon étagé (6) en métal ou matière plastique.